# EUROPEAN PATENT APPLICATION

(11) **EP 4 478 787 A1**
(43) Date of publication of application: **18.12.2024**
(21) Application number: 22925308.3
(22) Date of filing: 09.02.2022
(51) Int. Cl.: H04W 40/22, H04W 88/04, H04W 76/18

(54) **COMMUNICATION HOLDING METHOD AND APPARATUS**

(71) Applicant: FUJITSU LIMITED, Kawasaki-shi, Kanagawa 211-8588 (JP)
(72) Inventor: LI, Guorong, Beijing 100022 (CN); WANG, Xin, Beijing 100022 (CN)
(74) Representative: Haseltine Lake Kempner LLP
(86) International application number: PCT/CN2022/075708
(87) International publication number: WO 2023/150946

(57) **Abstract**

Embodiments of the present disclosure provide a communication maintaining method and device, the method includes: a terminal equipment receives a first notification message transmitted by a relay device, a cause value or indication type in the first notification message being handover of relay device, or cell selection or reselection, or Uu interface radio link failure; the terminal equipment decides to maintain connection with the relay device, and suspends data transmission with the relay device.

## Description

### TECHNICAL FIELD

The present disclosure relates to the field of communications.

### BACKGROUND

In release 17, sidelink relay (SL relay) is being studied, the sidelink relay contains a scenario of a terminal-to-network relay (UE-to-Network relay). A Uu interface of new radio (NR) is used on a Uu link of a relay device (relay UE), and a sidelink of the NR is assumed to be used in a PC5 interface between a remote device (remote UE) and the relay device.

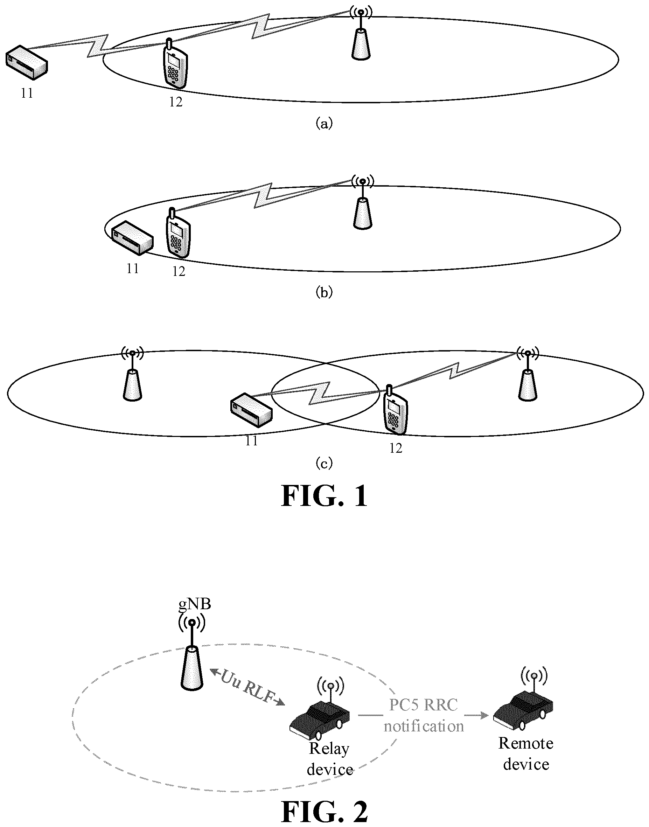

FIG. 1 is a schematic diagram of a scenario of UE-to-network relay, as shown in FIG. 1, in scenario (a), remote UE 11 is outside the coverage of a network, and relay UE (that is, UE-to-NW relay) 12 is inside the coverage of a network; in scenario (b), both remote UE 11 and relay UE 12 are within the coverage of a network; in scenario (c), remote UE 11 and relay UE 12 are located in the coverage of different cells.

In 3GPP (Third Generation Partnership Project) discussion of Layer-2 (L2) UE-to-Network relay, the following contents are agreed:
when a relay UE detects Radio link failure of a Uu interface (Uu Radio link failure, Uu RLF), the relay UE may transmit a PC5-S message to a remote UE connected with the relay UE, and this message may trigger relay reselection by the remote UE;
when the relay UE performs handover to another gNB, the relay UE may transmit a PC5-S message to a remote UE connected with the relay UE, and this message may trigger relay reselection by the remote UE;
when a relay UE in an idle or inactive state performs cell selection or cell reselection, the relay UE may transmit an indication/a message to a remote UE connected with the relay UE, and this indication/message may trigger relay reselection by the remote UE;
when Uu RLF occurs in the relay UE, a PC5-RRC (radio resource control) message may be used to transmit an indication to the remote UE, and FIG. 2 is a schematic diagram of this scenario;
when the relay UE performs handover, a PC5-RRC message is used to inform the remote UE;
when the relay UE performs cell selection or cell reselection, a PC5-RRC message is used to inform the remote UE.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### SUMMARY

The inventor finds that upon receiving a PC5-RRC message, the remote UE may decide to maintain PC5-RRC connection with the relay UE. In this situation, the remote UE will not perform a PC5-RRC connection release process, which will cause the following two problems:
Problem 1: if the remote UE decides to maintain PC5-RRC connection with the relay UE and continues to transmit uplink signaling or uplink data via the relay UE, such signaling/data may not reach a network device (for example, in a case where the relay UE detects Uu RLF) and are lost;
Problem 2: if the remote UE decides to maintain PC5-RRC connection with the relay UE, it is assumed that the remote UE suspends data transmission with the relay UE; if the relay UE later successfully recovers the Uu RLF but the remote UE is unaware of this situation, the remote UE cannot resume communication with a network via the relay UE; in addition, the remote UE may decide to release the PC5-RRC connection with the remote UE according to an implementation and perform relay reselection, which increases service interruption time for the remote UE to communicate with the network.

For the above problems or other similar problems, the embodiments of the present disclosure provide a communication maintaining method and device.

According to an aspect of the embodiments of the present disclosure, a communication maintaining device is provided, configured in a terminal equipment, the device includes:
a receiving unit configured to receive a first notification message transmitted by a relay device, a cause value or indication type in the first notification message being handover of relay device, or cell selection or reselection, or Uu interface radio link failure; and
a processing unit configured to decide to maintain connection with the relay device, and suspend data transmission with the relay device.

According to another aspect of the embodiments of the present disclosure, a communication maintaining device is provided, configured in a relay device, the device includes:
a first transmitting unit configured to transmit a first notification message to a terminal equipment, a cause value or indication type in the first notification message being handover of relay device, or cell selection or reselection, or Uu interface radio link failure; and
a processing unit configured to buffer or store signaling and/or data from the terminal equipment.

According to a further aspect of the embodiments of the present disclosure, a communication maintaining device is provided, configured in a terminal equipment, the device includes:
a first processing unit configured to maintain connection with a relay device after receiving a first notification message transmitted by the relay device; and
a second processing unit configured to recover data transmission with the relay device after receiving a second notification message transmitted by the relay device.

According to a further aspect of the embodiments of the present disclosure, a communication maintaining device is provided, configured in a relay device, the device includes:
a transmitting unit configured to transmit a first notification message to a terminal equipment;
a processing unit configured to trigger or transmit a second notification message to the terminal equipment in a case where at least one of the following conditions is satisfied:
   the relay device does not receive a PC5-S release message from the terminal equipment;
   the relay device successfully performs a Uu interface radio link failure recovery process;
   the relay device successfully performs a handover process; and
   the relay device completes cell selection or reselection.

One of advantageous effects of the embodiments of the present disclosure lies in: according to the embodiments of the present disclosure, on one hand, data loss may be avoided when a remote UE maintains connection with a relay UE, on the other hand, after the relay UE recovers Uu RLF or handover is completed or cell selection (reselection) is completed, it helps the remote UE recover communication with a network via the relay UE, reduces power consumption for the remote UE to select or reselect a cell or relay, and reduces interruption time of data transmission for the remote UE.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on these drawings under the premise that they do not pay inventive labor. In the drawings:
FIG. 1 is a schematic diagram of a scenario of UE-to-Network relay;
FIG. 2 is a schematic diagram of notifying a remote UE via a PC5-RRC message when Uu RLF occurs in a relay UE;
FIG. 3 is a schematic diagram of a communication maintaining method in the embodiments of a first aspect of the present disclosure;
FIG. 4 is a schematic diagram of a communication maintaining method in the embodiments of a second aspect of the present disclosure;
FIG. 5 is a schematic diagram of a communication maintaining method in the embodiments of a third aspect of the present disclosure;
FIG. 6 is a schematic diagram of a communication maintaining method in the embodiments of a fourth aspect of the present disclosure;
FIG. 7 is a schematic diagram of a communication maintaining device in the embodiments of a fifth aspect of the present disclosure;
FIG. 8 is another schematic diagram of a communication maintaining device in the embodiments of a fifth aspect of the present disclosure;
FIG. 9 is another schematic diagram of a communication maintaining device in the embodiments of a fifth aspect of the present disclosure;
FIG. 10 is a further schematic diagram of a communication maintaining device in the embodiments of a fifth aspect of the present disclosure;
FIG. 11 is a schematic diagram of a communication system in the embodiments of the present disclosure;
FIG. 12 is a schematic diagram of a terminal equipment in the embodiments of the present disclosure;
FIG. 13 is a schematic diagram of a relay device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to...... ", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "a cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

At the last 3GPP meeting, it was agreed that:
when a PC5-RRC message for notification is received, implementation of the remote UE decides whether to release or maintain a unicast PC5 link with the relay UE. If the remote UE decides to release the unicast PC5 link, the remote UE triggers a traditional Layer-2 release process and performs relay reselection;
to allow the remote UE to decide whether to trigger relay selection or reselection, the PC5-RRC message transmitted by the relay UE includes a cause value, i.e., handover or cell selection (reselection) or Uu RLF.
in SL relay-related standards, this PC5-RRC message is called a sidelink notification message (Notification Message Sidelink). For the actions for the remote UE upon receiving the PC5-RRC message, the Standard has the following description:

| | | | | | |
|---|---|---|---|---|---|
| 5.8.9.x4.4 | | | | | Actions related to reception of *NotificationMessageSidelink* message |
| Upon receiving the *NotificationMessageSidelink*, the U2N Remote UE shall: | | | | | |
| | 1> if the *indicationType* is included: | | | | |
| | | 2> if the UE is L2 U2N Remote UE in RRC_CONNECTED: | | | |
| | | | 3> initiate the RRC connection re-establishment procedure as specified in 5.3.7; | | |
| | | 2> else if the UE is L3 U2N Remote UE, or L2 U2N Remote UE in RRC _IDLE or RRC_INACTIVE: | | | |
| | | | 3> if the PC5-RRC connection with the U2N Relay UE is determined to be released: | | |
| | | | | 4> perform the PC5-RRC connection release as specified in 5.8.9.5. | |
| | | | **3> else maintain the PC5-RRC connection;** | | |
| Note: For L3 U2N Remote UE, or L2 U2N Remote UE in RRC_IDLE or RRC_INACTIVE, it is up to Remote UE implementation whether to release or keep the unicast PC5 link. | | | | | |

In addition, for RRC connection re-establishment, the Standard has the following description:

| | | | | | |
|---|---|---|---|---|---|
| 5.3.7 | | | | RRC connection re-establishment | |
| 5.3.7.2 | | | | | Initiation |
| ... | | | | | |
| | 1> if the UE is connected with a L2 U2N Relay UE via PC5-RRC connection (i.e. the UE is a L2 U2N Remote UE): | | | | |
| | | 2> if the PC5-RRC connection with the U2N Relay UE is determined to be released: | | | |
| | | | 3> perform the PC5-RRC connection release as specified in 5.8.9.5. | | |
| | | | 3> perform either cell selection in accordance with the cell selection process as specified in TS 38.304 [20], or relay selection as specified in clause 5.8.x3.3, or both; | | |
| | | **2> else maintain the PC5 RRC connection;** | | | |
| | Note 1: It is up to Remote UE implementation whether to release or keep the current unicast PC5 | | | | |
| | | | | | link. |
| | | | 1> else: | | |
| | | | | 2> perform cell selection in accordance with the cell selection process as specified in TS 38.304 [20]. | |
| | | | NOTE 2: For L2 U2N Remote UE, if both a suitable cell and a suitable relay are available, the UE can select either one based on its implementation. | | |

However, as described above, upon receiving a PC5-RRC message, the remote UE may decide to maintain PC5-RRC connection with the relay UE. In this situation, the remote UE will not perform a PC5-RRC connection release process. As a result, signaling or data transmitted by the remote UE via the relay UE cannot reach a network side, or after the relay UE successfully recovers Uu RLF, the remote UE cannot resume communication with the network via the relay UE since the remote UE is not aware of this situation.

For the above problems, the present disclosure is proposed. Various implementations of the present disclosure will be described below with reference to the drawings. These implementations are exemplary only and are not limitations to the present disclosure.

### Embodiments of a first aspect

The embodiments of the present disclosure provide a communication maintaining method, which is described from a terminal equipment side.

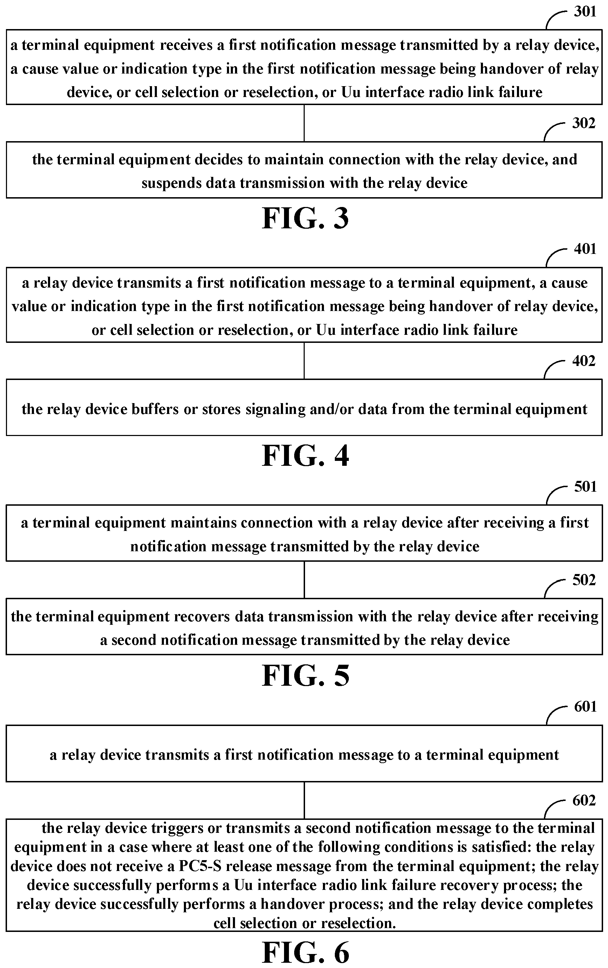

FIG. 3 is a schematic diagram of a communication maintaining method in the embodiments of the present disclosure, referring to FIG. 3, the method includes:
301: a terminal equipment receives a first notification message transmitted by a relay device, a cause value or indication type in the first notification message being handover of relay device, or cell selection or reselection, or Uu interface radio link failure; and
302: the terminal equipment decides to maintain connection with the relay device, and suspends data transmission with the relay device.

In the embodiments of the present disclosure, when the relay device is handed over, or cell selection or reselection occurs, or Uu RLF occurs, the relay device may transmit the first notification message to the terminal equipment to notify the terminal equipment of such a situation via a cause value or indication type in the first notification message, the cause value or indication type e.g. is handover of relay device, or cell selection or reselection, or Uu interface radio link failure. After receiving the first notification message, the terminal equipment may suspend data transmission with the relay device, thereby the terminal equipment will not transmit uplink signaling and/or uplink data via the relay device any more, which avoids that such signaling/data cannot reach a network side.

In the above embodiments, the terminal equipment may decide whether to maintain connection with the relay device based on its own implementation.

In some embodiments, the terminal equipment may first decide whether to maintain the connection with the relay device, and then suspends the data transmission with the relay device; or, the terminal equipment may first suspend the data transmission with the relay device, and then decides whether to maintain the connection with the relay device; or the terminal equipment may first initiate an RRC connection re-establishment process, suspends the data transmission with the relay device during the RRC reestablishment process, and decides whether to remain the connection with the relay device, and so on.

In the embodiments of the present disclosure, the first notification message may be an existing PC5-RRC message. For the relevant contents of the PC5-RRC message, relevant technologies may be referred to, description is omitted here. The present disclosure is not limited to this, the first notification message may further be other message.

In the embodiments of the present disclosure, if the terminal equipment is in a connected state (an RRC_CONNECTED state), the terminal equipment may suspend the data transmission with the relay device by performing at least one of the following operations, including but not limited to:
suspending all radio bearers (RBs) except signaling radio bearer 0 (SRBO);
suspending PC5 radio link control (PC5 RLC) channels corresponding to all radio bearers except SRBO;
suspending SRBO;
suspending a PC5 RLC channel corresponding to SRBO;
resetting media access control (MAC);
stopping or suspending transmission of physical layer data or signaling to the relay device.

In the embodiments of the present disclosure, if the terminal equipment is in an idle or inactive state (RRC_Idle or RRC_Inactive state), the terminal equipment may suspend the data transmission with the relay device by performing at least one of the following operations, including but not limited to:
suspending SRBO and/or a PC5 RLC channel corresponding to SRBO;
resetting media access control (MAC);
transmitting a system information request (SI request) to the relay device to request for updating system information; and
initiating cell selection or cell reselection.

For example, if the relay device transmits said first notification message to the terminal equipment when cell reselection or handover is completed, the terminal equipment may transmit the system information request to the relay device to request for updating system information, or, the relay device may also transmit system information of a serving cell after the relay device completes reselection or handover to the terminal equipment in the case of not receiving the system information request from the terminal equipment and completing the cell reselection or completing the handover.

Each of the above embodiments is only illustrative for the embodiments of the present disclosure, but the present disclosure is not limited to this, appropriate modifications can be also made based on the above each embodiment. For example, a triggering condition of each of the above embodiments may be used individually, or one or more of triggering conditions in each of the above embodiments may be combined.

According to the method in the embodiments of the present disclosure, data loss may be avoided when the remote UE maintains connection with the relay UE.

### Embodiments of a second aspect

The embodiments of the present disclosure provide a communication maintaining method, which is described from a relay device side.

FIG. 4 is a schematic diagram of a communication maintaining method in the embodiments of the present disclosure, as shown in FIG. 4, the method includes:
401: a relay device transmits a first notification message to a terminal equipment, a cause value or indication type in the first notification message being handover of relay device, or cell selection or reselection, or Uu interface radio link failure; and
402: the relay device buffers or stores signaling and/or data from the terminal equipment.

In the embodiments of the present disclosure, when the relay device is handed over or cell selection or reselection occurs, or Uu RLF occurs, the relay device may transmit the first notification message to the terminal equipment to notify the terminal equipment of such a situation via a cause value or indication type in the first notification message, the cause value or indication type e.g. is handover of the relay device, or cell selection or reselection, or Uu interface radio link failure. What is different from the embodiments of the first aspect is that in the embodiments of the present disclosure, there is no need for the terminal equipment to suspend the data transmission with the relay device, but the relay device buffers or stores signaling/data from the terminal equipment, thereby the relay device may transmit the cached or stored signaling/data to a network side after handover is completed, or cell selection/reselection is completed, or the Uu RLF is recovered, which avoids data loss.

In the embodiments of the present disclosure, the first notification message may be an existing PC5-RRC message. For the relevant contents of the PC5-RRC message, relevant technologies may be referred to, description is omitted here. The present disclosure is not limited to this, the first notification message may further be other message.

In the embodiments of the present disclosure, the signaling/data may be signaling/data transmitted by the terminal equipment to the network device via the relay device. For PC5 interface signaling, such as an SI request transmitted by the terminal equipment to the relay device, etc., the relay device may cache or not cache such signaling, the present disclosure does not restrict in this regard.

In some embodiments, the relay device may catch or store signaling/data from the terminal equipment in a PC5 interface, for example, the terminal equipment may, on the PC5 interface, catch or store a PC5 sidelink relay adaptation protocol service data unit (PC5 SRAP SDU) and/or a PC5 sidelink relay adaptation protocol protocol data unit (PC5 SRAP PDU) and/or a PC5 radio link control service data unit (PC5 RLC SDU) and/or a PC5 radio link control protocol data unit (PC5 RLC PDU) and/or a PC5 media access control service data unit (PC5 MAC SDU) and/or a PC5 media access control protocol data unit (PC5 MAC PDU) and/or PC5 physical layer data, etc., the present disclosure is not limited to this.

In some embodiments, the relay device may, in a Uu interface, catch or store signaling/data from the terminal equipment, for example, the terminal equipment may, on the Uu interface, catch or store a Uu SRAP SDU and/or Uu SRAP PDU and/or Uu RLC SDU and/or Uu RLC PDU and/or Uu MAC SDU and/or Uu MAC PDU and/or Uu physical layer data, etc., the present disclosure is not limited to this.

In the embodiments of the present disclosure, the relay device may transmit the buffered or stored signaling and/or data to the network device after handover is completed or cell selection or reselection is completed or Uu interface RLF is recovered, thereby avoiding data loss.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, the remote UE may continue to transmit uplink signaling or uplink data to the relay UE, and the relay UE may cache/store such signaling/data, avoiding data loss.

### Embodiments of a third aspect

The embodiments of the present disclosure provide a communication maintaining method, which is described from a terminal equipment side.

FIG. 5 is a schematic diagram of a communication maintaining method in the embodiments of the present disclosure, as shown in FIG. 5, the method includes:
501: a terminal equipment maintains connection with a relay device after receiving a first notification message transmitted by the relay device; and
502: the terminal equipment recovers data transmission with the relay device after receiving a second notification message transmitted by the relay device.

In the embodiments of the present disclosure, the relay device transmits a first notification message to the terminal equipment after handover or cell selection or reselection or Uu RLF occurs, and transmits a second notification message to the terminal equipment after completing the handover or cell selection or reselection or recovering the Uu RLF, thereby the terminal equipment maintains connection with the relay device after receiving the first notification message, and restores the data transmission with the relay device after receiving the second notification message. Thereby, it is helpful for the terminal equipment to recover communication with a network via the relay device, reduce power consumption of the terminal equipment to select or reselect a cell or a relay device, and reduce interruption time of the data transmission of the terminal equipment.

In the embodiments of the present disclosure, a cause value or indication type in the first notification message e.g. is handover of relay device, or cell selection or reselection, or Uu interface radio link failure, a cause value or indication type in the second notification message e.g. is that the handover of relay device is completed or the cell selection or reselection is completed or the Uu interface RLF is recovered.

In the above embodiments, the first notification message and the second notification message may be realized via the same PC5-RRC message, such as a sidelink notification message (NotificationMessageSidelink message), and the first notification message or the second notification message may be distinguished via different cause values or indication types, but the present disclosure is not limited to this, the first notification message and the second notification message may also be realized by different PC5-RRC messages.

In the embodiments of the present disclosure, the terminal equipment may restore the data transmission with the relay device by performing at least one of the following operations, including but not limited to:
resuming all radio bearers except SRBO;
reestablishing packet data convergence protocols (PDCPs) of SRB2 and a data radio bearer (DRB);
resuming PC5 RLC channels corresponding to all radio bearers except SRBO or reestablishing RLC corresponding to all radio bearers except SRBO;
resuming SRB 1;
reestablishing a PDCP of SRB 1;
resuming a PC5 RLC channel corresponding to SRB 1 or reestablishing RLC (such as a PC5 RLC entity) of SRB 1;
resuming transmission to the relay device;
applying default configuration for SRB1, such as SL-RLC 1;
transmitting a system information request (SI request) to the relay device to request updated system information;
stopping or terminating a cell selection or reselection process; and
stopping or terminating an RRC connection reestablishment process.

In the embodiments of the present disclosure, in the terminal equipment, a timer or a predefined time period may be further used to wait for a second notification message from the relay device.

In some embodiments, the terminal equipment starts a timer when receiving the first notification message, and the terminal equipment stops the timer if the terminal equipment receives the second notification message during running of the timer.

In the above embodiments, if the terminal equipment does not receive the second notification message during running of the timer, after the timer expires, the terminal equipment may perform at least one of the following operations:
initiating RRC connection reestablishment;
continuing RRC connection reestablishment;
releasing PC5 connection with the relay device; and
performing cell selection or relay selection.

Thereby, the terminal equipment will not wait for the second notification message limitlessly, which further improves reliability of communication.

In the above embodiments, the timer may be predefined, or may be configured by a network device, the present disclosure does not restrict in this regard.

In some embodiments, if the terminal equipment does not receive the second notification message within a predefined time period after receiving the first notification message, the terminal equipment performs at least one of the following operations:
initiating RRC connection reestablishment;
continuing RRC connection reestablishment;
releasing PC5 connection with the relay device; and
performing cell selection or relay selection.

Thereby, the time for the terminal equipment to wait for the second notification message is limited via the predefined time period, also avoiding resource waste and communication interruption caused by the terminal equipment to wait for the second notification message limitlessly, and improving reliability of communication.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined, for example the embodiments of the third aspect may be used in combination with the embodiments of the first aspect, etc.

According to the method in the embodiments of the present disclosure, it helps the terminal equipment to restore the communication with a network via the relay device, reduce power consumption of the terminal equipment to select or reselect a cell or a relay device, and reduce interruption time of the data transmission of the terminal equipment.

### Embodiments of a fourth aspect

The embodiments of the present disclosure provide a communication maintaining method, which is described from a relay device side, the contents same as the embodiments of the third aspect are not repeated any more.

FIG. 6 is a schematic diagram of a communication maintaining method in the embodiments of the present disclosure, as shown in FIG. 6, the method includes:
601: a relay device transmits a first notification message to a terminal equipment;
602: the relay device triggers or transmits a second notification message to the terminal equipment in a case where at least one of the following conditions is satisfied:
   the relay device does not receive a PC5-S release message from the terminal equipment;
   the relay device successfully performs a Uu interface radio link failure recovery process;
   the relay device successfully performs a handover process; and
   the relay device completes cell selection or reselection.

In the embodiments of the present disclosure, after transmitting the first notification message to the terminal equipment, the relay device transmits the second notification message to the terminal equipment when at least one of the above conditions is satisfied. Thereby, the terminal equipment may restore the communication with a network via the relay device, reducing power consumption of the terminal equipment to select or reselect a cell or a relay device, and reducing interruption time of the data transmission of the terminal equipment.

In some embodiments, a cause value or indication type in the first notification message is handover of relay device, or cell selection or reselection, or Uu interface radio link failure. When the relay device is handed over, or cell selection or reselection occurs, or Uu RLF occurs, the relay device may transmit the first notification message to the terminal equipment to notify the terminal equipment of such a situation via a cause value or indication type in the first notification message.

In some embodiments, a cause value or indication type in the second notification message is that the handover of relay device is completed or the cell selection or reselection is completed or the Uu interface RLF is recovered. When the relay device does not receive a PC5-S release message from the terminal equipment; and/or, the relay device has successfully performed a Uu interface radio link failure recovery process; and/or, the relay device has successfully performed a handover process; and/or, the relay device has completed cell selection or reselection, the relay device may transmit the second notification message to the terminal equipment to notify the terminal equipment of such a situation via a cause value or indication type in the second notification message.

In the above embodiments, the PC5-S release message from the terminal equipment is, for example, a Disconnect Request message.

In the above embodiments, that the relay device has successfully performed a Uu interface radio link failure recovery process, for example is that, the relay device has successfully performed an RRC connection re-establishment process (for example, a random access process is successful or an RRC re-establishment complete message is successfully transmitted to a network), or has successfully performed a CHO process during the RRC connection re-establishment process (for example, a random access process is successful or an RRC reconfiguration complete message is successfully transmitted to a network), etc.

In the above embodiments, that the relay device has successfully performed a handover process, for example is that, a random access process is successful or an RRC reconfiguration complete message is successfully transmitted to a network.

In the above embodiments, the relay device has completed cell selection or reselection, for example is that, the relay device selects or reselects a suitable cell.

In the embodiments of the present disclosure, the first notification message and the second notification message may be realized via the same PC5-RRC message, such as a sidelink notification message (NotificationMessageSidelink message), and the first notification message or the second notification message may be distinguished via different cause values or indication types, but the present disclosure is not limited to this, the first notification message and the second notification message may also be realized by different PC5-RRC messages.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, it helps the terminal equipment to restore the communication with a network via the relay device, reduce power consumption of the terminal equipment to select or reselect a cell or a relay device, and reduce interruption time of the data transmission of the terminal equipment.

### Embodiments of a fifth aspect

The embodiments of the present disclosure provide a communication maintaining device.

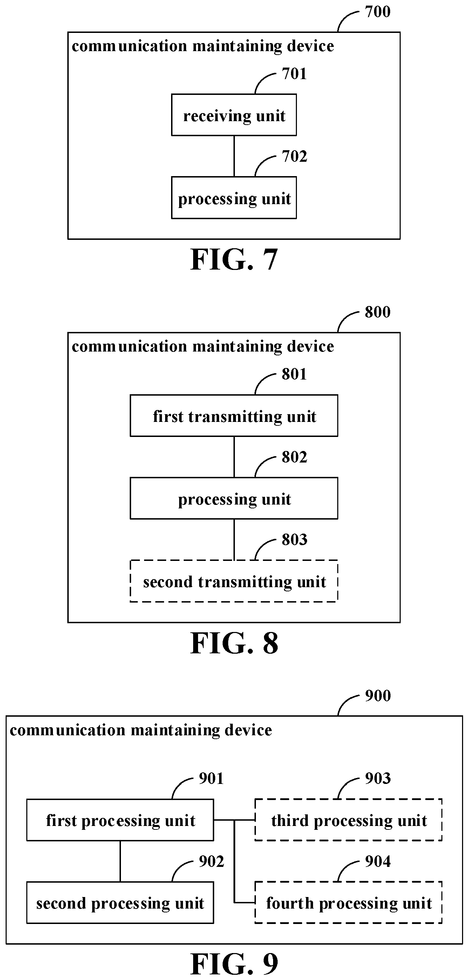

FIG. 7 is a schematic diagram of a communication maintaining device in the embodiments of the present disclosure, the device may, for example, be a terminal equipment, or may be one or more parts or components configured in the terminal equipment. The principle of the apparatus to solve the problem is same as the method in the embodiments of the first aspect, thus its specific implementation can refer to the implementation of the method in the embodiments of the first aspect, the same contents will not be repeated.

As shown in FIG. 7, the communication maintaining device 700 in the embodiments of the present disclosure includes:
a receiving unit 701 configured to receive a first notification message transmitted by a relay device, a cause value or indication type in the first notification message being handover of relay device, or cell selection or reselection, or Uu interface radio link failure; and
a processing unit 702 configured to decide to maintain connection with the relay device, and suspend data transmission with the relay device.

In some embodiments, if the terminal equipment is in a connected state, the processing unit 702 performs at least one of the following operations to suspend data transmission with the relay device:
suspending all radio bearers except SRBO;
suspending PC5 RLC channels corresponding to all radio bearers except SRBO;
suspending SRBO;
suspending a PC5 RLC channel corresponding to SRBO;
resetting MAC;
stopping or suspending transmission of physical layer data or signaling to the relay device.

In some embodiments, if the terminal equipment is in an idle state or an inactive state, the processing unit 702 performs at least one of the following operations to suspend data transmission with the relay device:
suspending SRBO and/or a PC5 RLC channel corresponding to SRBO;
resetting MAC;
transmitting a system information request to the relay device to request for updating system information; and
initiating cell selection or cell reselection.

In the embodiments of the present disclosure, the first notification message e.g. is a PC5 RRC message.

In some embodiments, the processing unit 702 first decides whether to maintain the connection with the relay device, and then suspends the data transmission with the relay device; or, first suspends the data transmission with the relay device, and then decides whether to maintain the connection with the relay device.

FIG. 8 is another schematic diagram of a communication maintaining device in the embodiments of the present disclosure, the device may, for example, be a relay device, or may be one or more parts or components configured in the relay device. The principle of the apparatus to solve the problem is same as the method in the embodiments of the second aspect, thus its specific implementation can refer to the implementation of the method in the embodiments of the second aspect, the same contents will not be repeated.

As shown in FIG. 8, the communication maintaining device 800 in the embodiments of the present disclosure includes:
a first transmitting unit 801 configured to transmit a first notification message to a terminal equipment, a cause value or indication type in the first notification message being handover of relay device, or cell selection or reselection, or Uu interface radio link failure; and
a processing unit 802 configured to buffer or store signaling and/or data from the terminal equipment.

In some embodiments, the processing unit 802 buffers signaling and/or data from the terminal equipment, including:
the processing unit 802 buffers or stores, in a PC5 interface, PC5 SRAP SDU and/or PC5 SRAP PDU and/or PC5 RLC SDU and/or PC5 RLC PDU and/or PC5 MAC SDU and/or PC5 MAC PDU and/or PC5 physical layer data.

In some embodiments, the processing unit 802 buffers signaling and/or data from the terminal equipment, including:
the processing unit 802 buffers or stores, in a Uu interface, Uu SRAP SDU and/or Uu SRAP PDU and/or Uu RLC SDU and/or Uu RLC PDU and/or Uu MAC SDU and/or Uu MAC PDU and/or Uu physical layer data.

In the embodiments of the present disclosure, the signaling and/or data is/are signaling and/or data transmitted by the terminal equipment to a network device via the relay device.

In some embodiments, as shown in FIG. 8, the apparatus 800 further includes:
a second transmitting unit 803 configured to transmit the buffered or stored signaling and/or data to the network device after handover of relay device is completed or cell selection or reselection is completed or Uu interface RLF is recovered.

In the embodiments of the present disclosure, the first notification message e.g. is a PC5 RRC message.

FIG. 9 is another schematic diagram of a communication maintaining device in the embodiments of the present disclosure, the device may, for example, be a terminal equipment, or may be one or more parts or components configured in the terminal equipment. The principle of the apparatus to solve the problem is same as the method in the embodiments of the third aspect, thus its specific implementation can refer to the implementation of the method in the embodiments of the third aspect, the same contents will not be repeated.

As shown in FIG. 9, the communication maintaining device 900 in the embodiments of the present disclosure includes:
a first processing unit 901 configured to maintain connection with a relay device after the terminal equipment receives a first notification message transmitted by the relay device; and
a second processing unit 902 configured to recover data transmission with the relay device after the terminal equipment receives a second notification message transmitted by the relay device.

In some embodiments, a cause value or indication type in the first notification message is handover of relay device, or cell selection or reselection, or Uu interface radio link failure; and/or a cause value or indication type in the second notification message is that the handover of relay device is completed or the cell selection or reselection is completed or the Uu interface RLF is recovered.

In some embodiments, the first notification message and the second notification message are the same PC5 RRC message, or are different PC5 RRC messages.

In some embodiments, the second processing unit 902 recovers data transmission with the relay device, including: the second processing unit 902 performs at least one of the following operations:
resuming all radio bearers except SRBO;
reestablishing PDCPs of SRB2 and DRB;
resuming PC5 RLC channels corresponding to all radio bearers except SRBO or reestablishing RLC corresponding to all radio bearers except SRBO;
resuming SRB 1;
reestablishing a PDCP of SRB 1;
resuming a PC5 RLC channel corresponding to SRB 1 or reestablishing RLC of SRB1;
resuming transmission to the relay device;
applying default configuration for SRB 1;
transmitting a system information request to the relay device to request updated system information;
stopping or terminating a cell selection or reselection process; and
stopping or terminating an RRC connection reestablishment process.

In some embodiments, as shown in FIG. 9, the device 900 further includes:
a third processing unit 903 configured to start a timer when the terminal equipment receives the first notification message, and stop the timer if the terminal equipment receives the second notification message during running of the timer.

In some embodiments, if the terminal equipment does not receive the second notification message during running of the timer, after the timer expires, the third processing unit 903 performs at least one of the following operations:
initiating RRC connection reestablishment;
continuing RRC connection reestablishment;
releasing PC5 connection with the relay device; and
performing cell selection or relay selection.

In some embodiments, a value of the timer is configured by the network device or is predefined.

In some embodiments, as shown in FIG. 9, the device 900 further includes:
a fourth processing unit 904, configured to, if the terminal equipment does not receive the second notification message within a predefined time period after receiving the first notification message, perform at least one of the following operations:
initiating RRC connection reestablishment;
continuing RRC connection reestablishment;
releasing PC5 connection with the relay device; and
performing cell selection or relay selection.

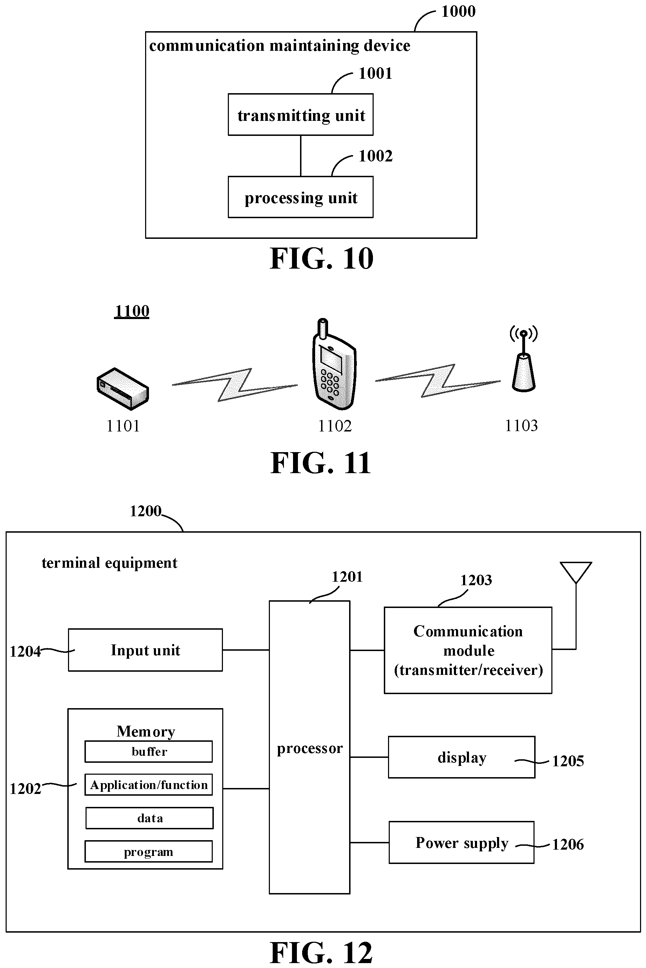

FIG. 10 is another schematic diagram of a communication maintaining device in the embodiments of the present disclosure, the device may, for example, be a relay device, or may be one or more parts or components configured in the relay device. The principle of the apparatus to solve the problem is same as the method in the embodiments of the fourth aspect, thus its specific implementation can refer to the implementation of the method in the embodiments of the fourth aspect, the same contents will not be repeated.

As shown in FIG. 10, the communication maintaining device 1000 in the embodiments of the present disclosure includes:
a transmitting unit 1001 configured to transmit a first notification message to a terminal equipment;
a processing unit 1002 configured to trigger or transmit a second notification message to the terminal equipment in a case where at least one of the following conditions is satisfied:
   if the relay device does not receive a PC5-S release message from the terminal equipment;
   if the relay device successfully performs a Uu interface radio link failure recovery process;
   if the relay device successfully performs a handover process; and
   if the relay device completes cell selection or reselection.

In some embodiments, a cause value or indication type in the first notification message is handover of relay device, or cell selection or reselection, or Uu interface radio link failure; and/or a cause value or indication type in the second notification message is that the handover of relay device is completed or the cell selection or reselection is completed or the Uu interface RLF is recovered.

In some embodiments, the first notification message and the second notification message are the same PC5 RRC message, or are different PC5 RRC messages.

It's worth noting that the above only describes components or modules related to the present disclosure, but the present disclosure is not limited to this. The communication maintaining devices 700, 800, 900, 1000 in the embodiments of the present disclosure may further include other components or modules. For detailed contents of these components or modules, relevant technologies can be referred to.

Moreover, for the sake of simplicity, FIG. 7 to FIG. 10 only exemplarily show a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

According to the device in the embodiments of the present disclosure, on one hand, data loss is avoided, on the other hand, it helps the terminal equipment to restore the communication with a network via the relay device, reduce power consumption of the terminal equipment to select or reselect a cell or a relay device, and reduce interruption time of the data transmission of the terminal equipment.

### Embodiments of a sixth aspect

The embodiments of the present disclosure provide a communication system. FIG. 11 is a schematic diagram of a communication system in the embodiments of the present disclosure. As shown in FIG. 11, the communication system 1100 includes a terminal equipment 1101, a relay device 1102 and a network device 1103. For the sake of simplicity, FIG. 11 only takes a terminal equipment, a relay device and a network device as examples to describe, but the embodiments of the present disclosure are not limited to this.

In the embodiments of the present disclosure, the terminal equipment 1101, the relay device 1102 and the network device 1103 are under a scenario of UE-to-Network relay.

In some embodiments, the terminal equipment 1101 is configured to perform the method described in the embodiments of the first or third aspect; the relay device 1102 is configured to perform the method described in the embodiments of the second or fourth aspect; the network device 1103 is configured to receive signaling/data transmitted by the terminal equipment 1101 via the relay device 1102. Since each method has been described in details in the embodiments of the first to fourth aspects, its contents are incorporated here and are omitted here.

The embodiments of the present disclosure further provide a terminal equipment, the terminal equipment for example may be a UE under a scenario of UE-to-Network relay, but the present disclosure is not limited to this, it may also be other device.

FIG. 12 is a schematic diagram of a terminal equipment in the embodiments of the present disclosure. As shown in FIG. 12, the terminal equipment 1200 may include a processor 1201 and a memory 1202; the memory 1202 stores data and programs, and is coupled to the processor 1201. It's worth noting that this figure is exemplary; other types of structures can also be used to supplement or replace this structure, so as to realize a telecommunication function or other functions.

For example, the processor 1201 may be configured to execute a program to implement the method described in the embodiments of the first aspect or the third aspect.

As shown in FIG. 12, the terminal equipment 1200 may further include: a communication module 1203, an input unit 1204, a display 1205 and a power supply 1206. The functions of said components are similar to related arts, which are not repeated here. It's worth noting that the terminal equipment 1200 does not have to include all the components shown in FIG. 12, said components are not indispensable. Moreover, the terminal equipment 1200 may also include components not shown in FIG. 12, related arts can be referred to.

The embodiments of the present disclosure further provide a relay device, the relay device for example may be a relay UE under a scenario of UE-to-Network relay, but the present disclosure is not limited to this, it may also be other device.

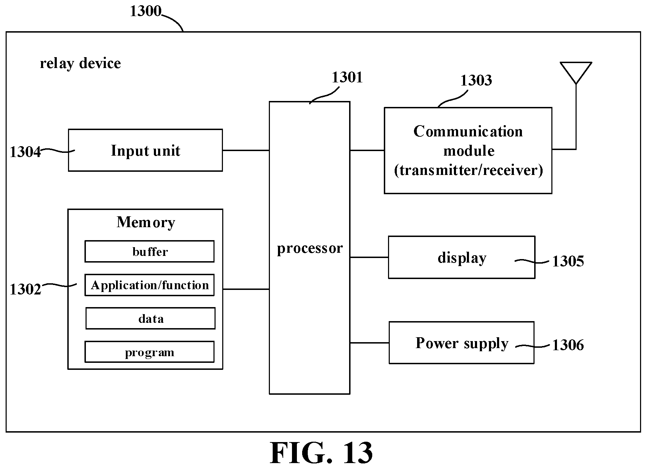

FIG. 13 is a schematic diagram of a relay device in the embodiments of the present disclosure. As shown in FIG. 13, the relay device 1300 may include a processor 1301 and a memory 1302; the memory 1302 stores data and programs, and is coupled to the processor 1301. It's worth noting that this figure is exemplary; other types of structures can also be used to supplement or replace this structure, so as to realize a telecommunication function or other functions.

For example, the processor 1301 can be configured to execute a program to implement the method described in the embodiments of the second aspect or the fourth aspect.

As shown in FIG. 13, the relay device 1300 may further include: a communication module 1303, an input unit 1304, a display 1305 and a power supply 1306. The functions of said components are similar to related arts, which are not repeated here. It's worth noting that the relay device 1300 does not have to include all the components shown in FIG. 13, said components are not indispensable. Moreover, the relay device 1300 may also include components not shown in FIG. 13, related arts can be referred to.

The embodiments of the present disclosure further provide a computer readable program, wherein when a terminal equipment executes the program, the program enables a computer to execute the method described in the embodiments of the first or third aspect, in the terminal equipment.

The embodiments of the present disclosure further provide a storage medium in which a computer readable program is stored, wherein the computer readable program enables a computer to execute the method as described in the embodiments of the first or third aspect, in the terminal equipment.

The embodiments of the present disclosure further provide a computer readable program, wherein when a relay device executes the program, the program enables a computer to execute the method described in the embodiments of the second or fourth aspect, in the relay device.

The embodiments of the present disclosure further provide a storage medium in which a computer readable program is stored, wherein the computer readable program enables a computer to execute the method as described in the embodiments of the second or fourth aspect, in a relay device.

The device and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

Regarding the above implementations disclosed in this embodiment, the following supplements are further disclosed:
1. A communication maintaining method, the method includes:
   a terminal equipment receives a first notification message transmitted by a relay device, a cause value or indication type in the first notification message being handover of relay device, or cell selection or reselection, or Uu interface radio link failure; and
   the terminal equipment decides to maintain connection with the relay device, and suspends data transmission with the relay device.
2. The method according to Supplement 1, wherein the terminal equipment suspends data transmission with the relay device, including:
   if the terminal equipment is in a connected state, the terminal equipment performs at least one of the following operations:
   suspending all radio bearers except SRBO;
   suspending PC5 RLC channels corresponding to all radio bearers except SRBO;
   suspending SRBO;
   suspending a PC5 RLC channel corresponding to SRBO;
   resetting MAC;
   stopping or suspending transmission of physical layer data or signaling to the relay device.
3. The method according to Supplement 1, wherein the terminal equipment suspends data transmission with the relay device, including:
   if the terminal equipment is in an idle state or an inactive state, the terminal equipment performs at least one of the following operations:
   suspending SRBO and/or a PC5 RLC channel corresponding to SRBO;
   resetting MAC;
   transmitting a system information request to the relay device to request for updating system information; and
   initiating cell selection or cell reselection.
4. The method according to any one of Supplements 1 to 3, wherein the first notification message is a PC5 RRC message.
5. A communication maintaining method, the method includes:
   a relay device transmits a first notification message to a terminal equipment, a cause value or indication type in the first notification message being handover of relay device, or cell selection or reselection, or Uu interface radio link failure; and
   the relay device buffers or stores signaling and/or data from the terminal equipment.
6. The method according to Supplement 5, wherein the relay device buffers signaling and/or data from the terminal equipment, including:
   the terminal equipment buffers or stores, in a PC5 interface, PC5 SRAP SDU and/or PC5 SRAP PDU and/or PC5 RLC SDU and/or PC5 RLC PDU and/or PC5 MAC SDU and/or PC5 MAC PDU and/or PC5 physical layer data.
7. The method according to Supplement 5, wherein the relay device buffers signaling and/or data from the terminal equipment, including:
   the terminal equipment buffers or stores, in a Uu interface, Uu SRAP SDU and/or Uu SRAP PDU and/or Uu RLC SDU and/or Uu RLC PDU and/or Uu MAC SDU and/or Uu MAC PDU and/or Uu physical layer data.
8. The method according to any one of Supplements 5 to 7, wherein the signaling and/or data is/are signaling and/or data transmitted by the terminal equipment to a network device via the relay device.
9. The method according to Supplement 8, wherein the method further includes:
   the relay device transmits the buffered or stored signaling and/or data to the network device after handover is completed or cell selection or reselection is completed or Uu interface RLF is recovered.
10. The method according to any one of Supplements 5 to 7, wherein the first notification message is a PC5 RRC message.
11. A communication maintaining method, the method includes:
   a terminal equipment maintains connection with a relay device after receiving a first notification message transmitted by the relay device; and
   the terminal equipment recovers data transmission with the relay device after receiving a second notification message transmitted by the relay device.
12. The method according to Supplement 11, wherein
   a cause value or indication type in the first notification message is handover of relay device, or cell selection or reselection, or Uu interface radio link failure; and/or,
   a cause value or indication type in the second notification message is that the handover of relay device is completed or the cell selection or reselection is completed or the Uu interface RLF is recovered.
13. The method according to Supplement 11 or 12, wherein the first notification message and the second notification message are the same PC5 RRC message, or are different PC5 RRC messages.
14. The method according to Supplement 11 or 12, wherein the terminal equipment restores the data transmission with the relay device, including:
   the terminal equipment performs at least one of the following operations:
   resuming all radio bearers except SRBO;
   reestablishing PDCPs of SRB2 and DRB;
   resuming PC5 RLC channels corresponding to all radio bearers except SRBO or reestablishing RLC corresponding to all radio bearers except SRBO;
   resuming SRB1;
   reestablishing a PDCP of SRB 1;
   resuming a PC5 RLC channel corresponding to SRB1 or reestablishing RLC of SRB1;
   resuming transmission to the relay device;
   applying default configuration for SRB 1;
   transmitting a system information request to the relay device to request updated system information;
   stopping or terminating a cell selection or reselection process; and
   stopping or terminating an RRC connection reestablishment process.
15. The method according to any one of Supplements 11 to 14, wherein the method further includes:
   the terminal equipment starts a timer when receiving the first notification message;
   if the terminal equipment receives the second notification message during running of the timer, the terminal equipment stops the timer.
16. The method according to Supplement 15, wherein
   if the terminal equipment does not receive the second notification message during running of the timer, after the timer expires, the terminal equipment performs at least one of the following operations:
   initiating RRC connection reestablishment;
   continuing RRC connection reestablishment;
   releasing PC5 connection with the relay device; and
   performing cell selection or relay selection.
17. The method according to Supplement 15, wherein
   a value of the timer is configured by the network device or is predefined.
18. The method according to any one of Supplements 11 to 14, wherein the method further includes:
   if the terminal equipment does not receive the second notification message within a predefined time period after receiving the first notification message, the terminal equipment performs at least one of the following operations:
   initiating RRC connection reestablishment;
   continuing RRC connection reestablishment;
   releasing PC5 connection with the relay device; and
   performing cell selection or relay selection.
19. A communication maintaining method, the method includes:
   a relay device transmits a first notification message to a terminal equipment;
   the relay device triggers or transmits a second notification message to the terminal equipment in a case where at least one of the following conditions is satisfied:
      the relay device does not receive a PC5-S release message from the terminal equipment;
      the relay device successfully performs a Uu interface radio link failure recovery process;
      the relay device successfully performs a handover process; and
      the relay device completes cell selection or reselection.
20. The method according to Supplement 19, wherein
   a cause value or indication type in the first notification message is handover of relay device, or cell selection or reselection, or Uu interface radio link failure; and/or,
   a cause value or indication type in the second notification message is that the handover of relay device is completed or the cell selection or reselection is completed or the Uu interface RLF is recovered.
21. The method according to Supplement 19 or 20, wherein the first notification message and the second notification message are the same PC5 RRC message, or are different PC5 RRC messages.
22. A terminal equipment, including a memory and a processor, the memory storing a computer program, and the processor being configured to execute the computer program to implement the method according to any one of Supplements 1 to 4 and 11 to 18.
23. A relay device, including a memory and a processor, the memory storing a computer program, and the processor being configured to execute the computer program to implement the method according to any one of Supplements 5 to 10 and 19 to 21.
24. A communication system, including a terminal equipment, a relay device and a network device, wherein
   the terminal equipment is configured to execute the method according to any one of Supplements 1 to 4 and 11 to 18;
   the relay device is configured to execute the method according to any one of Supplements 5 to 10 and 19 to 21;
   the network device is configured to receive signaling and/or data transmitted by the terminal equipment via the relay device.

## Claims

1. A communication maintaining device, configured in a terminal equipment, wherein the device comprises:
a receiving unit configured to receive a first notification message transmitted by a relay device, a cause value or indication type in the first notification message being one of handover of relay device, cell selection or reselection, or Uu interface radio link failure; and
a processing unit configured to decide to maintain connection with the relay device, and suspend data transmission with the relay device.

2. The device according to claim 1, wherein that the processing unit suspends data transmission with the relay device comprises that: if the terminal equipment is in a connected state, the processing unit performs at least one of the following operations:
suspending all radio bearers except signaling radio bearer 0 (SRBO);
suspending PC5 interface radio link control (PC5 RLC) channels corresponding to all radio bearers except signaling radio bearer 0 (SRBO);
suspending signaling radio bearer 0 (SRBO);
suspending a PC5 interface radio link control (PC5 RLC) channel corresponding to signaling radio bearer 0 (SRBO);
resetting medium access control (MAC); and
stopping or suspending transmission of physical layer data or signaling to the relay device.

3. The device according to claim 1, wherein that the processing unit suspends data transmission with the relay device comprises that:
if the terminal equipment is in an idle state or an inactive state, the processing unit performs at least one of the following operations:
suspending signaling radio bearer 0 (SRBO) and/or PC5 interface radio link control (PC5 RLC) corresponding to signaling radio bearer 0 (SRBO);
resetting medium access control (MAC);
transmitting a system information request to the relay device to request for updating system information; and
initiating cell selection or cell reselection.

4. The device according to claim 1, wherein the first notification message is a PC5 interface radio resource control (PC5 RRC) message.

5. The device according to claim 1, wherein the processing unit first decides whether to maintain the connection with the relay device, and then suspends the data transmission with the relay device; or, first suspends the data transmission with the relay device, and then decides whether to maintain the connection with the relay device.

6. A communication maintaining device, configured in a relay device, wherein the device comprises:
a first transmitting unit configured to transmit a first notification message to a terminal equipment, a cause value or indication type in the first notification message being one of handover of relay device, cell selection or reselection, or Uu interface radio link failure; and
a processing unit configured to buffer or store signaling and/or data from the terminal equipment.

7. The device according to claim 6, wherein that the processing unit buffers signaling and/or data from the terminal equipment comprises that:
the processing unit buffers or stores, in a PC5 interface, a PC5 interface sidelink relay adaptation protocol service data unit (PC5 SRAP SDU) and/or a PC5 interface sidelink relay adaptation protocol protocol data unit (PC5 SRAP PDU) and/or a PC5 interface radio link control service data unit (PC5 RLC SDU) and/or a PC5 interface radio link control protocol data unit (PC5 RLC PDU) and/or a PC5 interface media access control service data unit (PC5 MAC SDU) and/or a PC5 interface media access control protocol data unit (PC5 MAC PDU) and/or PC5 physical layer data.

8. The device according to claim 6, wherein that the processing unit buffers signaling and/or data from the terminal equipment comprises that:
the processing unit buffers or stores, in a Uu interface, a Uu interface sidelink relay adaptation protocol service data unit (Uu SRAP SDU) and/or a Uu interface sidelink relay adaptation protocol protocol data unit (Uu SRAP PDU) and/or a Uu interface radio link control service data unit (Uu RLC SDU) and/or a Uu interface radio link control protocol data unit (Uu RLC PDU) and/or a Uu interface media access control service data unit (Uu MAC SDU) and/or a Uu interface media access control protocol data unit (Uu MAC PDU) and/or Uu physical layer data.

9. The device according to claim 6, wherein the signaling and/or data is/are signaling and/or data transmitted by the terminal equipment to a network device via the relay device.

10. The device according to claim 9, wherein the device further comprises:
a second transmitting unit configured to transmit the buffered or stored signaling and/or data to the network device after handover of relay device is completed or cell selection or reselection is completed or Uu interface RLF is recovered.

11. The device according to claim 6, wherein the first notification message is a PC5 interface radio resource control (PC5 RRC) message.

12. A communication maintaining device, configured in a terminal equipment, wherein the device comprises:
a first processing unit configured to maintain connection with a relay device after the terminal equipment receives a first notification message transmitted by the relay device; and
a second processing unit configured to recover data transmission with the relay device after the terminal equipment receives a second notification message transmitted by the relay device.

13. The device according to claim 12, wherein,
a cause value or indication type in the first notification message is one of handover of relay device, cell selection or reselection, or Uu interface radio link failure; and/or,
a cause value or indication type in the second notification message is the handover of relay device is completed or the cell selection or reselection is completed or the Uu interface radio link failure is recovered.

14. The device according to claim 12, wherein the first notification message and the second notification message are the same PC5 interface radio resource control (PC5 RRC) message, or are different PC5 interface radio resource control (PC5 RRC) messages.

15. The device according to claim 12, wherein that the second processing unit recovers data transmission with the relay device comprises that:
the second processing unit performs at least one of the following operations:
restarting all radio bearers except signaling radio bearer 0 (SRBO);
reestablishing packet data convergence protocols (PDCPs) of signaling radio bearer 2 (SRB2) and a data radio bearer (DRB);
restarting a PC5 interface radio link control (PC5 RLC) channel corresponding to all radio bearers except signaling radio bearer 0 (SRBO) or reestablishing radio link control (RLC) corresponding to all radio bearers except signaling radio bearer 0 (SRBO);
restarting signaling radio bearer 1 (SRB1);
reestablishing a PDCP of signaling radio bearer 1 (SRB1);
restarting a PC5 interface radio link control (PC5 RLC) channel corresponding to signaling radio bearer 1 (SRB 1) or reestablishing radio link control (RLC) of signaling radio bearer 1 (SRB 1);
restarting transmission to the relay device;
applying default configuration for signaling radio bearer 1 (SRB1);
transmitting a system information request to the relay device to request updated system information;
stopping or terminating a cell selection or reselection process; and
stopping or terminating a radio resource control (RRC) connection reestablishment process.

16. The device according to claim 12, wherein the device further comprises:
a third processing unit configured to start a timer when the terminal equipment receives the first notification message, and stop the timer if the terminal equipment receives the second notification message during running of the timer.

17. The device according to claim 16, wherein,
if the terminal equipment does not receive the second notification message during running of the timer, after the timer expires, the third processing unit performs at least one of the following operations:
initiating radio resource control (RRC) connection reestablishment;
continuing radio resource control (RRC) connection reestablishment;
releasing PC5 connection with the relay device; and
performing cell selection or relay selection.

18. The device according to claim 16, wherein,
a value of the timer is configured by the network device or is predefined.

19. The device according to claim 12, wherein the device further comprises:
a fourth processing unit, if the terminal equipment does not receive the second notification message within a predefined time period after receiving the first notification message, perform at least one of the following operations:
initiating radio resource control (RRC) connection reestablishment;
continuing radio resource control (RRC) connection reestablishment;
releasing PC5 connection with the relay device; and
performing cell selection or relay selection.

20. The device according to claim 12, wherein,
the second notification message is transmitted by the relay device when at least one of the following conditions is satisfied that:
the relay device does not receive a PC5-S release message from the terminal equipment;
the relay device successfully performs a Uu interface radio link failure recovery process;
the relay device successfully performs a handover process; and
the relay device completes cell selection or reselection.
